# EUROPÄISCHE PATENTANMELDUNG

(11) **EP 1 191 419 A2**
(43) Veröffentlichungstag der Anmeldung: **27.03.2002**
(21) Anmeldenummer: 01119169.9
(22) Anmeldetag: 08.08.2001
(51) Int. Cl.: G06F 1/00

(54) **Verfahren zur Übermittlung verschlüsselter Informationen zur Registrierung eines Applikationsprogramms**

(30) Priorität: 21.09.2000 DE 10046895
(71) Anmelder: SIEMENS AKTIENGESELLSCHAFT, 80333 München (DE)
(72) Erfinder: Schulze, Karsten, 85390 Hallbergmoos (DE)

(57) **Zusammenfassung**

Die Erfindung betrifft ein Verfahren zur Übermittlung verschlüsselter Informationen zur Registrierung eines Applikationsprogramms, das auf einer ersten Programmsteuerungseinrichtung (APD1) installiert ist. Erste Applikationsinformationen (X1) mit zumindest einer gegenüber Benutzerzugriffen gesperrten Teilinformation (X1A) werden an eine zweite Programmsteuerungseinrichtung (APD2) übermittelt. In der zweiten Programmsteuerungseinrichtung (APD2) wird mittels Codierung aus den ersten Applikationsinformationen (X1) ein Applikationswert (Y) berechnet. Der Applikationswert (Y) wird an die erste Programmsteuerungseinrichtung (APD1) übermittelt. In der ersten Programmsteuerungseinrichtung (APD1) werden mittels Decodierung aus dem Applikationswert (Y) zweite Applikationsinformationen (X2) ermittelt. Bei einem Ausführungsbeginn des Applikationsprogramms (APPL) werden die ersten Applikationsinformationen (X1) und die zweiten Applikationsinformationen (X2) auf Übereinstimmung überprüft. In Abhängigkeit der sich bei der Überprüfung ergebenden Abweichungen werden vorgebbare Funktionen des Applikationsprogramms (APPL) freigeschaltet.

## Beschreibung

Verfahren zur Übermittlung verschlüsselter Informationen zur Registrierung eines Applikationsprogrammes dienen einer Verhinderung von nicht autorisierten Vervielfältigungen des Applikationsprogramms. Derartige Verfahren dienen außerdem als technische Voraussetzung, um Applikationsprogramme als Produkte über E-Commerce zu vertreiben. Bei bisher bekannten Verfahren zur Registrierung von Applikationsprogrammen werden Applikationsprogramme anhand jeweils eines Registrierungsschlüssels freigeschaltet. Für eine Freischaltung eines Applikationsprogramms wird der Registrierungsschlüssel, der einer Applikationsprogrammlizenz fest zugeordnet ist, manuell eingegeben bzw. von einem Datenträger eingespielt. Insbesondere bei einer Vielzahl von auf unterschiedlichem Programmsteuerungseinrichtungen installierten Applikationsprogrammen resultiert hieraus ein hoher Addministrationsaufwand, der mit personalintensiven Bedien- und Wartungsarbeiten verbunden ist.

Der vorliegenden Erfindung liegt die Aufgabe zugrunde, ein Verfahren anzugeben, welches eine automatisierte Registrierung von auf Programmsteuerungseinrichtungen installierten Applikationsprogrammen ermöglicht.

Diese Aufgabe wird erfindungsgemäß durch ein Verfahren mit den in Anspruch 1 angegebenen Merkmalen gelöst. Vorteilhafte Weiterbildungen des erfindungsgemäßen Verfahrens sind den abhängigen Ansprüchen zu entnehmen.

Ein Aspekt des erfindungsgemäßen Verfahrens besteht darin, daß vorgebbare Funktionen eines Applikationsprogramms für eine wählbare Nutzungsdauer durch Modifikation eines Registrierungsschlüsselpaares mit zumindest einer gegenüber Benutzerzugriffen gesperrten Teilinformation freigeschaltet werden können. Die betreffenden Funktionen müssen dabei nicht bereits bei einer Erstinstallation des Applikationsprogramms für eine Freischaltung zur Verfügung gestanden haben. Außerdem ist zur Freischaltung kein Einsatz von Bedien- und Wartungspersonal am Ort der Programmsteuerungseinrichtung erforderlich, auf der das jeweilige Applikationsprogramm installiert ist. Bestandteile des Registrierungsschlüsselpaares sind Applikationsinformationen und ein Applikationswert. Die Applikationsinformationen werden an einer ersten Prgrammsteuerungseinrichtung eingegeben, auf der das zu registrierende Applikationsprogramm installiert ist, bzw. durch die erste Prgrammsteuerungseinrichtung generiert. Der Applikationswert wird in einer zweiten Programmsteuerungseinrichtung mittels Codierung aus dem Applikationsinformationen berechnet.

Bei einer Registrierung eines Applikationsprogramms oder einer Änderung der Registrierung werden erste Applikationsinformationen mit zumindest einer gegenüber Benutzerzugriffen gesperrten Teilinformation an die zweite Programmsteuerungseinrichtung übermittelt. In der zweiten Programmsteuerungseinrichtung wird aus den ersten Applikationsinformationen ein Applikationswert berechnet, der nachfolgend an die erste Programmsteuerungseinrichtung übermittelt wird. Mittels Decodierung werden in der ersten Programmsteuerungseinrichtung aus dem Applikationswert zweite Applikationsinformationen ermittelt. Die ersten und die zweiten Applikationsinformationen werden bei einem Ausführungsbeginn des Appliaktionsprogramms auf Übereinstimmung überprüft. In Abhängigkeit der sich bei der Überprüfung ergebenden Abweichungen werden vorgebbare Funktionen des Applikationsprogramms freigeschaltet.

Bei bisher bekannten Verfahren zur Registrierung von Applikationsprogrammen ist eine derartige Vorgehensweise nicht möglich. Anstelle des Registrierungsschlüsselpaares, dessen Bestandteile zwischen der ersten und der zweiten Programmsteuerungseinrichtung ausgetauscht werden, wird dort nämlich lediglich ein Registrierungsschlüssel mit vollständig gegenüber Benutzerzugriffen gesperrten Teilinformationen verwendet.

Die Erfindung wird nachfolgend an Ausführungsbeispielen anhand der Zeichnung näher erläutert. Es zeigt
- Figur 1: eine Anordnung mit einer ersten Programmsteuerungseinrichtung, einer zweiten Programmsteuerungseinrichtung und einem mit der ersten Programmsteuerungseinrichtung verbundenen Kommunikationssystem und
- Figur 2: ein Ablaufdiagramm für ein Verfahren zur Übermittlung verschlüsselter Informationen zur Registrierung eines Applikationsprogramms.

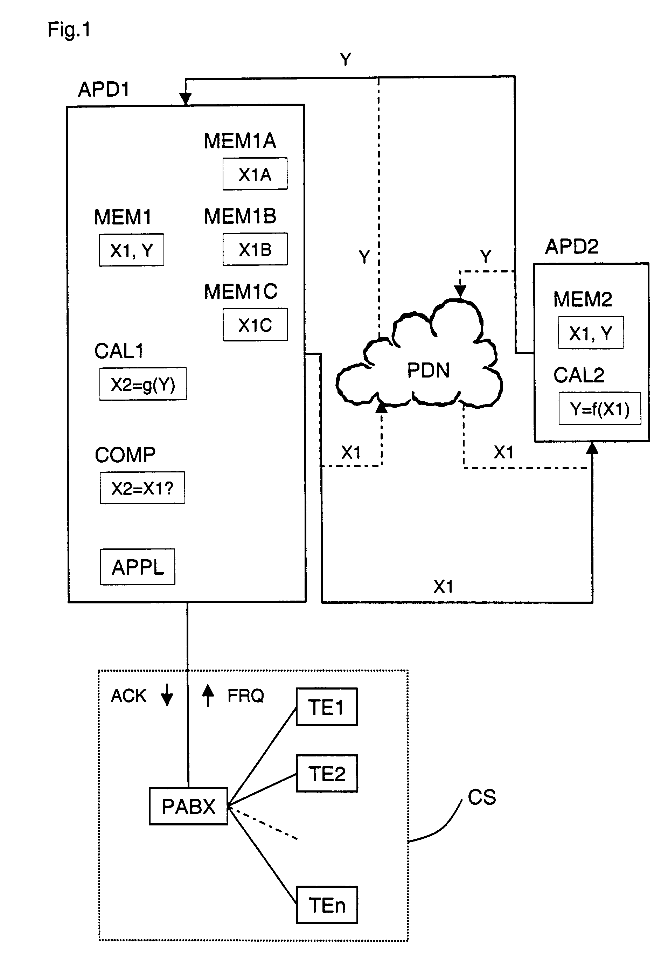

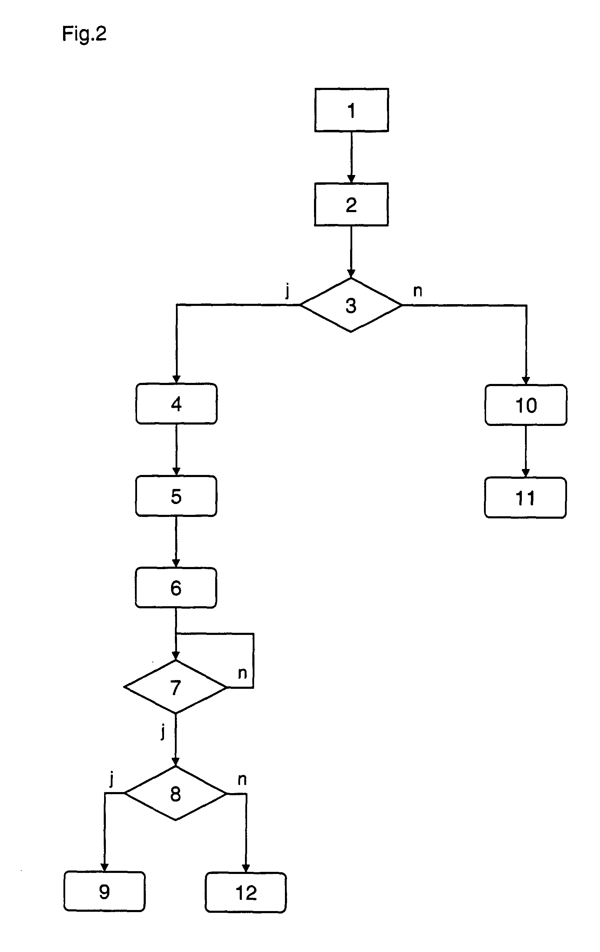

Die in Figur 1 dargestellte Anordnung weist eine erste Programmsteuerungseinrichtung APD1, eine zweite Programmsteuerungseinrichtung APD2 und ein Kommunikationssystem CS auf. Das Kommunikationssystem CS weist eine Kommunikationsanlage PABX und mehrere an die Kommunikationsanlage PABX angeschlossene Teilnehmerendgeräte TE1 bis TEn auf. Auf der ersten Programmsteuerungseinrichtung APD1 ist ein zunächst noch unregistriertes Applikationsprogramm APPL installiert. Funktionen des Applikationsprogramms APPL sind in diesem Zustand lediglich in eingeschränktem Umfang freigeschaltet. Den Ausgangspunkt für eine Freischaltung weiterer Funktionen des Applikationsprogramms APPL bildet eine benutzereingegebene Freischaltungsanforderung. Dabei werden erste Applikationsinformationen X1 durch die erste Programmsteuerungseinrichtung APD1 erfaßt. Dies entspricht Schritt 1 des in Figur 2 dargestellten Ablaufdiagramms.

Die ersten Applikationsinformationen X1 sind verschlüsselt und verteilt in einer der ersten Programmsteuerungseinrichtung APD1 zugeordneten Speichereinrichtung MEM1 abgespeichert. Die Speichereinrichtung MEM1 weist mehrere MEM1A, MEM1B, MEM1C auf. In den Speicherbereichen MEM1A, MEM1B, MEM1C sind programmsteuerungseinrichtungsbezogene Teilinformationen X1A, applikationsprogrammbezogene Teilinformationen X1B und benutzerbezogene Teilinformationen X1C der ersten Applikationsinformationen X1 abgespeichert. Die programmsteuerungseinrichtungsbezogenen Teilinformationen X1A sind gegenüber Benutzerzugriffen gesperrt.

Bei den programmsteuerungseinrichtungsbezogenen Teilinformationen X1A handelt es sich beispielsweise um ein Prozessoridentifikationskennzeichen, ein Netzwerkkartenidentifikationskennzeichen, eine IP-Adresse (Internet Protocol) der ersten Programmsteuerungseinrichtung APD1 oder um sonstige Hardwareidentifikationsmerkmale. Die genannten sind in ihrer Kombination gegenüber Benutzermanipulationen gesichert. Eine Manipulation der genannten Hardwareidentifikationsmerkmale hat eine erneute Registrierung des Applikationsprogramms APPL zur Folge. Eine erneute Registrierung wird nämlich erforderlich, sobald sich ein Identifikationsmerkmal einer Hardwarekomponente der Programmsteuerungseinrichtung APD1 ändert.

Bei den applikationsprogrammbezogenen Teilinformationen X1B handelt es sich beispielsweise um den Hersteller, den Produktnamen, die Produktversion oder um freizuschaltende Funktionen des Applikationsprogramms APPL. Zu den benutzerbezogenen Teilinformationen X1C zählen beispielsweise der Name, die Adresse oder eine durch den Hersteller des Applikationsprogramms APPL vergebene Kundennummer des Benutzers.

Gemäß Schritt 2 des in Figur 2 dargestellten Ablaufdiagramms werden die ersten Applikationsinformationen X1 an die zweite Programmsteuerungseinrichtung APD2 übermittelt. Dort wird beispielsweise anhand von Kunden- und Auftragsinformationen überprüft, ob die Freischaltungsanforderung zulässig ist (Schritt 3). Ist die Freischaltungsanforderung unzulässig, so wird eine Mitteilung über eine Unzulässigkeit der Freischaltungsanforderung an die erste Programmsteuerungseinrichtung APD1 übermittelt (Schritt 10). Außerdem werden die ersten Applikationsinformationen X1 bei einer Unzulässigkeit der Freischaltungsanforderung in der Programmsteuerungseinrichtung APD1 in ihren Zustand vor der Freischaltungsanforderung zurückgesetzt (Schritt 11).

Ist die Freischaltungsanforderung zulässig, so wird in einer Berechnungseinrichtung CAL2 der zweiten Programmsteuerungseinrichtung APD2 mittels Codierung aus den ersten Applikationsinformationen X1 ein Applikationswert Y berechnet (Schritt 4). Zur Berechnung des Applikationswertes Y aus den ersten Applikationsinformationen X1 kann beispielsweise neben dem Blowfish-Algorithmus die Hash-Funktion HAVAL verwendet werden. Zur Protokollierung des Berechnungsvorganges werden die ersten Applikationsinformationen X1 und der Applikationswert Y in einer Speichereinrichtung MEM2 der zweiten Programmsteuerungseinrichtung APD2 gespeichert. Der berechnete Applikationswert Y wird nachfolgend an die erste Programmsteuerungseinrichtung APD1 übermittelt und dort in der Speichereinrichtung MEM1 gespeichert (Schritt 5).

Die ersten Applikationsinformationen X1 bzw. der Applikationswert Y werden vorzugsweise über ein verbindungslose Dienste bereitstellendes Netz PDN übermittelt. Dies ist in Figur 1 durch die gestrichelten Verbindungen zwischen der ersten Programmsteuerungseinrichtung APD1, der zweiten Programmsteuerungseinrichtung APD2 und dem verbindungslose Dienste bereitstellenden Netz PDN angedeutet. Die ersten Applikationsinformationen X1 bzw. der Applikationswert Y können damit beispielsweise per E-Mail oder per Programmsteuerungselement (Applet) übermittelt werden.

In der ersten Programmsteuerungseinrichtung APD1 werden aus dem Applikationswert Y in einer Berechnungseinrichtung CAL1 der ersten Programmsteuerungseinrichtung APD1 mittels Decodierung zweite Applikationsinformationen ermittelt (Schritt 6). Nachfolgend wird überwacht, ob ein Ausführungsbeginn des Applikationsprogramms APPL erfolgt (Schritt 7). Bei einem Ausführungsbeginn des Applikationsprogramms APPL werden die ersten Applikationsinformationen X1 und die zweiten Applikationsinformationen X2 in einem Komparator COMP auf Übereinstimmung überprüft (Schritt 8). In Abhängigkeit der sich bei der Überprüfung ergebenden Abweichungen werden vorgebbare Funktionen des Applikationsprogramms APPL freigeschaltet (Schritt 9) oder gesperrt (Schritt 12).

Durch ein Freischalten von Funktionen des Applikationsprogramms APPL werden Leistungsmerkmale im Kommunikationssystem CS aktiviert oder deaktiviert. Hierzu wird von der Kommunikationsanlage PABX bzw. von einem der Teilnehmerendgeräte TE1 bis TEn eine Leistungsmerkmalanforderung FRQ an die erste Programmsteuerungseinrichtung APD1 übermittelt. Die Leistungsmerkmalanforderung FRQ wird von der ersten Programmsteuerungseinrichtung APD1 als Freischaltungsanforderung für ausgewählte Funktionen des Applikationsprogramms APPL behandelt. Bei erfolgter Aktivierung oder Deaktivierung eines Leistungsmerkmales wird eine Quittierungsmeldung ACK an die Kommunikationsanlage PABX übermittelt.

Die vorliegende Erfindung ist nicht auf die beschriebenen Ausführungsbeispiele beschränkt.

## Patentansprüche

1. Verfahren zur Übermittlung verschlüsselter Informationen zur Registrierung eines Applikationsprogramms, das auf einer ersten Programmsteuerungseinrichtung (APD1) installiert ist, bei dem
- erste Applikationsinformationen (X1) mit zumindest einer gegenüber Benutzerzugriffen gesperrten Teilinformation (X1A) an eine zweite Programmsteuerungseinrichtung (APD2) übermittelt werden,
- in der zweiten Programmsteuerungseinrichtung (APD2) mittels Codierung aus den ersten Applikationsinformationen (X1) ein Applikationswert (Y) berechnet wird,
- der Applikationswert (Y) an die erste Programmsteuerungseinrichtung (APD1) übermittelt wird,
- in der ersten Programmsteuerungseinrichtung (APD1) mittels Decodierung aus dem Applikationswert (Y) zweite Applikationsinformationen (X2) ermittelt werden,
- bei einem Ausführungsbeginn des Applikationsprogramms (APPL) die ersten Applikationsinformationen (X1) und die zweiten Applikationsinformationen (X2) auf Übereinstimmung überprüft werden,
- in Abhängigkeit der sich bei der Überprüfung ergebenden Abweichungen vorgebbare Funktionen des Applikationsprogramms (APPL) freigeschaltet werden.

2. Verfahren nach Anspruch 1,
**dadurch gekennzeichnet, daß** die ersten Applikationsinformationen (X1) verschlüsselt und verteilt auf einer der ersten Programmsteuerungseinrichtung (APD1) zugeordneten Speichereinrichtung (MEM1) abgespeichert sind.

3. Verfahren nach einem der Ansprüche 1 oder 2,
**dadurch gekennzeichnet, daß** durch ein Freischalten von Funktionen des Applikationsprogramms (APPL) in einem Kommunikationssystem (CS) verfügbare Leistungsmerkmal aktiviert order deaktiviert werden.

4. Verfahren nach einem der Ansprüche 1 bis 3,
**dadurch gekennzeichnet, daß** die ersten Applikationsinformationen (X1) und/oder der Applikationswert (Y) über ein verbindungslose Dienste bereitstellendes Netz (PDN) übermittelt werden.

5. Verfahren nach Anspruch 4,
**dadurch gekennzeichnet, daß** die ersten Applikationsinformationen (X1) und/oder der Applikationswert (Y) per E-Mail übermittelt werden.

6. Verfahren nach einem der Ansprüche 4 oder 5,
**dadurch gekennzeichnet, daß** die ersten Applikationsinformationen (X1) und/oder der Applikationswert (Y) per Programmsteuerungselement (Applet) übermittelt werden.

7. Verfahren nach einem der Ansprüche 1 bis 6,
**dadurch gekennzeichnet, daß** die ersten Applikationsinformationen (X1) programmsteuerungseinrichtungsbezogene Teilinformationen (X1A), applikationsprogrammbezogene Teilinformationen (X1B) und/oder benutzerbezogene Teilinformationen (X1C) aufweisen.
